Europäisches Patentamt

European Patent Office

Office européen des brevets

(19)

(11) Veröffentlichungsnummer: **0 210 411 B1**

(12) **EUROPÄISCHE PATENTSCHRIFT**

(45) Veröffentlichungstag der Patentschrift: **17.07.91**

(51) Int. Cl.5: **H01B 13/26, B21C 37/15**

(21) Anmeldenummer: **86108322.8**

(22) Anmeldetag: **19.06.86**

(54) **Verfahren zur Herstellung einer metallischen Umhüllung für ein elektrisches Kabel mit einer aussen eckigen und innen runden Kontur.**

(30) Priorität: **02.08.85 DE 3527714**

(43) Veröffentlichungstag der Anmeldung:
**04.02.87 Patentblatt 87/06**

(45) Bekanntmachung des Hinweises auf die
Patenterteilung:
**17.07.91 Patentblatt 91/29**

(84) Benannte Vertragsstaaten:
**BE CH FR GB IT LI NL**

(56) Entgegenhaltungen:
**GB-A- 739 350**
**GB-A- 1 073 958**

**PATENT ABSTRACTS OF JAPAN, Band 7, Nr.
149 (M-225)[1294], 30. Juni 1983; & JP-A-58 58
992**

(73) Patentinhaber: **KERNFORSCHUNGSZENTRUM
KARLSRUHE GMBH
Weberstrasse 5 Postfach 3640
W-7500 Karlsruhe 1(DE)**

(72) Erfinder: **Beckenbach, Max
Im Kirchfeld 13
W-7513 Stutensee-Bl.(DE)**
Erfinder: **Förster, Siegfried
Kolberger Strasse 28c
W-7500 Karlsruhe(DE)**
Erfinder: **Nyilas, Arman, Dr.
Margaritenweg 1
W-7513 Stutensee-4(DE)**

**Beschreibung**

Die vorliegende Erfindung betrifft ein Verfahren zur Herstellung einer druckfesten metallischen Umhüllung für ein elektrisches Kabel gemäß dem Oberbegriff des Patentanspruches 1.

Sie bezweckt die Herstellung von innen gekühlten elektrischen Kabeln, die mit einer äußeren Stahlhülle versehen sind, welche imstande ist, eine hohe Steifigkeit zu gewährleisten. Derart geformte Stahlprofile sind im allgemeinen nur in begrenzten Längen erhältlich und sind somit für ein durchlaufendes Fertigungsverfahren nicht direkt anwendbar.

Zur Herstellung von innen gekühlten supraleitenden Kabeln wurden bisher folgende Techniken angewendet:

Die Kabelhülle wird durch Umformen eines Flachbandes um die Innenstruktur hergestellt, an der Trennfuge verschweißt und ggf. durch einen Ziehprozeß kompaktiert und in die geforderte Geometrie gebracht. Die bei dieser Fertigung ungenügende Steifigkeit sowie Innendruckfestigkeit müßte durch außen angelegte Stützstrukturen ausgeglichen werden. Für elektrische Kabelsysteme, die Kupferprofile enthalten, wurden U-förmige Profile durch Zusammenfügen der erhältlichen Kurzlängen zu den benötigten Kabellängen hergestellt.

Nachteilig ist dabei, daß die derart hergestellten Leiterhüllen stets eine gleiche Wanddicke besitzen müssen, die eine ungenügende Steifigkeit aufweist. Eine Erhöhung der Steifigkeit kann nur durch Zunahme der Wandstärke erreicht werden. Dies jedoch bedeutet - neben den Fertigungsschwierigkeiten - Stahlanhäufungen an der gesamten Leiterhülle und somit einen erhöhten Platzbedarf für eine Wicklung aus dem Leiter. Nachteilig ist dabei die dadurch resultierende geringe Stromdichte. Weiterhin begrenzt die Einleitung von Kräften beim Umform- und Ziehprozeß auf den eigentlichen Supraleiter bzw. auf das innenleitende Kabel die Anwendung der Verfahren auf spezielle Kabelversionen. Letztlich erlauben die genannten Fertigungsverfahren nicht eine gleichzeitige Funktion der Leiterhülle bezüglich einer hohen Druckaufnahme im Innern und einem optimalen Wicklungsaufbau durch die äußere Formgebung der Leiterhülle.

Aufgabe der vorliegenden Erfindung ist es daher, ein Herstellungsverfahren für elektrische Kabel mit druckfesten metallischen Umhüllungen anzugeben, welches geschweißte Rohre in, im technischen Sinne endlosen Längen mit abweichenden Geometrien des Innenbereichs vom Außenbereich ermöglicht. Zweckmäßigerweise sollte dabei der Fertigungsprozeß in einer Fertigungsstraße integriert sein. Die Hülle für das Kabel soll so ausgebildet sein, daß ein einfacher Innenaufbau des Kabels gegeben ist und die innere Formgebung für hohe Drücke, wie z.B. im Bereich von etwa 70 bar auslegbar ist. Solche Anforderungen können z.B. durch eine Stahlhülle erreicht werden, die in ihrem Innern rund und außen quadratisch, rechteckig oder hexagonal geformt ist.

Zur Lösung dieser Aufgabe schlägt nun die vorliegende Erfindung die Verfahrensschritt vor, die in den kennzeichnenden Merkmalen des Patentanspruches 1 aufgeführt sind. Eine weitere, vorteilhafte Weiterbildung eines solchen Herstellungsverfahrens ist in den Kennzeichen des Patentanspruches 2 beschrieben.

Danach wird das Kabel bzw. die Kabelumhüllung durch Umformen eines Flachbandprofiles, dessen Profilgestaltung entsprechend der geforderten Innen- und Außengeometrie eines Rohres oder einer Rohrhälfte angepaßt ist, erzeugt. Durch die Profilierung mittels der Profilwalzen kann die Hülle in der Fertigungsstraße dem vorgefertigten Supraleitungskabel oder einem anderen elektrischen Kabel zugeführt, kraftschonend aufgebracht und zu einem geschlossenen Rohr zusammengefügt werden. Der Vorteil des erfindungsgemäßen Verfahrens besteht vor allem darin, daß eine Fertigung von im technischen Sinne endlosen Rohren variabler Wanddicke mit z.B. im inneren rundem und außen quadratischem oder hexagonalem Querschnitt ermöglicht wird. Die Vorteile der nach dem erfindungsgemäßen Verfahren geformten Kabelhülle liegen darin, daß Ecken im Inneren der Hülle vermieden werden. Somit wird die Gefahr einer Beschädigung des Supraleiters oder eines anderen elektrischen Kabels, die durch eine notwendige Anpassungsverformung an eine eckige Außenhüllenkontur gegeben ist, vermieden. Das Kabel innen kann in der günstigen runden Geometrie verbleiben.

Die runde Kontur des Rohrinneren ist besonders gut geeignet, hohe Drücke aufzunehmen, die im Falle eines supraleitenden Kabels beispielsweise beim Übergang in die Normalleitung entstehen.

Durch den Übergang von der innen runden zur außen quadratischen Kontur ist die Voraussetzung für einen optimalen Packungsfaktor in einer Wicklung sowie eine gute Verarbeitbarkeit beim Wickeln der Spule zu einem Magneten gegeben.

Durch kraftflußgünstige Gestaltungsmöglichkeit der Wandstärke der Hülle können äußere Kräfte, die im Wicklungspaket auf das einzelne Kabel einwirken, von der Hülle vollständig aufgenommen werden. Der empfindliche innenliegende Teil, z.B. das supraleitende Kabel, wird dadurch vom Einfluß äußerer Kräfte nahezu frei gehalten. Gleichzeitig erhält das Kabel in einem Spulenverband die notwendige Steifigkeit.

Weitere Einzelheiten des erfindungsgemäßen Fertigungsverfahrens werden im folgenden anhand der Figuren 1 bis 5 näher erläutert. Es zeigen

    die Figur 1    den Querschnitt eines fertigen umhüllten supraleitenden Kabels, welches erzeugt werden soll,

    die Figur 2    das Höckerprofil vor dem Umformen,

    die Figur 3    das U-Profil nach dem Umformen,

    die Figur 4    a - e als Beispiel eine 5-stufige Umformstation und

    die Figur 5    eine schematisch dargestellte Gesamtanlage für die Herstellungsschritte ausgehend vom Höckerprofil als aufgewickeltes Band.

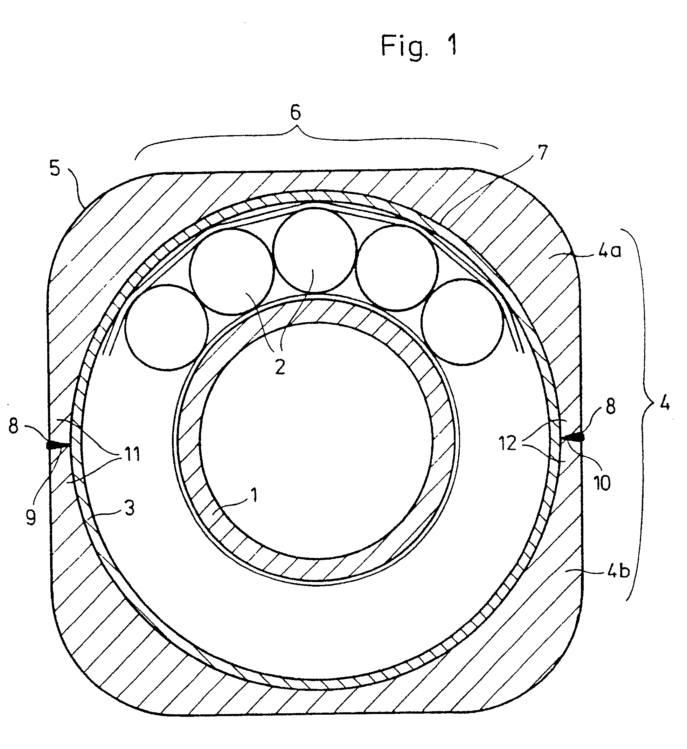

Das eigentliche supraleitende Kabel besteht gemäß der Figur 1 aus dem Innenrohr 1 als Kühlkanal für beispielsweise flüssiges Helium, um das die Leiter 2 herum angeordnet sind. Die Leiter 2 sind normalerweise von einer Isolierung 3 umgeben, die ganze, runde Kabelanordnung soll durch eine Stahlhülle 4 geschützt sein. Diese Stahlhülle 4 muß nun einschließlich der in ihm vorhandenen Kabelelemente zu einer möglichst dichten Spulenpaket, beispielsweise zu einem Magneten wickelbar sein, d.h. die Außenkontur sollte quadratischen, rechteckigen oder hexagonalen Querschnitt aufweisen. Die Ecken der Außenkontur besitzen dabei Radien 5, um die Isolation nicht zu beschädigen. In der Figur 1 ist eine quadratische Außenkontur 6 mit runder Innenkontur 7 dargestellt, ein Kabel mit hexagonaler Außenkontur sieht sinngemäß innen gleich aus.

Die Außenhülle 4 ist aus zwei Hälften 4a und 4b zusammengesetzt, die spiegelbildlich symmetrisch sind und mittels der Schweißnähte 8 zwischen den Stirnflächen 9 und 10 ihrer U-förmigen Schenkel 11 und 12 zu einer einheitlichen Hülle 4 zusammengefügt sind.

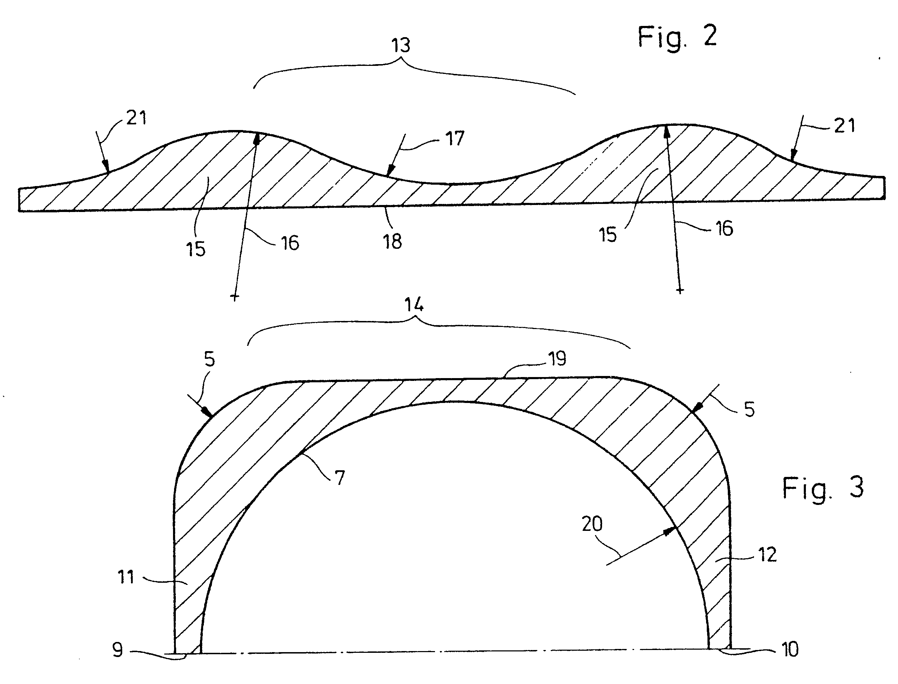

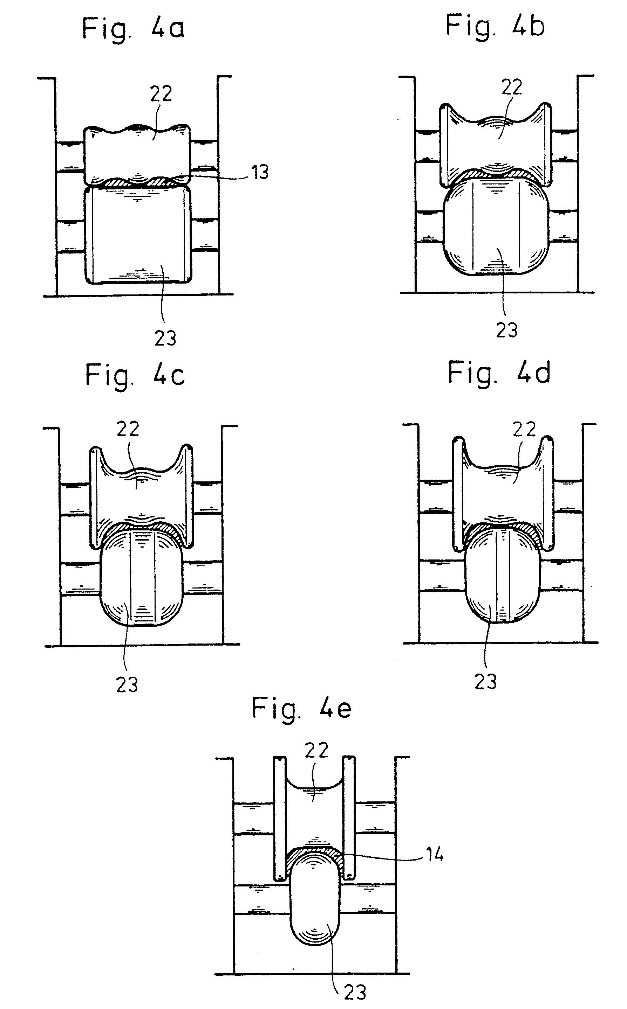

In der Figur 2 ist das Höckerprofil 13 dargestellt, das durch den Umformprozeß gemäß den Figuren 4a - e zu dem U-Profil 14 der Figur 3 umgeformt wird. Das Höckerprofil 13 weist auf seiner Oberseite zwei Höcker 15 zur späteren Bildung einer quadratischen oder rechteckigen Stahlhülle 4 oder drei Höcker 15 zur Bildung einer hexagonalen Hülle auf, die mit den Radien 16 abgerundet sind. Zwischen bzw. neben den Höckern 15 ist die Oberseite durch die Radien 17 und 21 gerundet. Die Unterseite 18 des Höckerprofiles 13 ist flach, seine Wandstärke somit unterschiedlich.

Das U-Profil 14 der Figur 3 wird später spiegelbildlich paarweise zu den Hälften 4a und 4b der Stahlhülle. Es weist eine ebene Grundfläche 19 sowie senkrecht darauf stehende U-Schenkel 11 und 12 auf, wobei die Übergänge durch die Radien 5 gebildet werden. Die Länge der Schenkel 11 und 12 sowie der Grundflächen 19 ist so bemessen, daß zwischen ihnen bei vorgegebener Wandstärke ein halbkreisförmiger Querschnitt bzw. die Hälfte der Innenkontur 7 aufgenommen werden kann, deren Radius 20 ist. Die Stirnflächen der U-Schenkel 11 und 12 sind mit 9 und 10 bezeichnet, sie sind genauso breit, wie die Fläche 19 an der dünnsten Stelle dick ist. Das U-Profil 14 ist somit an seiner Außenkontur eckig bzw. quadratisch, an seiner Innenkontur rund bzw. kreisförmig.

Eine Abfolge von möglichen Fertigungsschritten für das Umformen des Höckerprofiles 13 in das U-Profil 14 ist in den Figuren 4a - e dargestellt. Die Umformung erfolgt in der Weise, daß die Höcker 15 zu den kleineren Radien 5 umgeformt und der dazwischen liegende Radius 17 in eine flache Ebene 19 umgeformt werden. Die äußeren Radien 21 werden nach unten profiliert bzw. weggeklappt, so daß die Höcker 16 zu den Ecken eines U's werden. Die ebene Unterseite 18 wird zu einer Halbkreisinnenkontur 7 mit endlichem Radius 20 verformt. Diese Umformungen können durch mehrere nacheinander zu durchlaufende Profilwalzenpaare bewerkstelligt werden.

Dargestellt sind in Figur 4a Vorstufe Einricht- oder Einführwalzen, in Figur 4b eine erste Profilierstation, in Figur 4c eine zweite Profilierstation, in Figur 4d eine dritte Profilierstation und in der Figur 4e eine Kalibrierstation. Daran kann sich noch als weiterer Fertigungsschritt eine Bearbeitung auf genaues Sollmaß anschließen. Entscheidend ist bei der Umformung, daß sich die Form der Profilwalzenpaare hintereinander so ändert, wie es die Krafteinleitung zur Umformung nach den vorstehend beschriebenen Schritten erfordert. Die Oberwalzen 22 verändern sich dabei von einem Höckerprofil wie in Figur a zu einem U-Profil wie in Figur e, die Unterwalzen 23 von einem Flachprofil wie in Figur 4a zu einem Halbkreisprofil wie in Figur 4e.

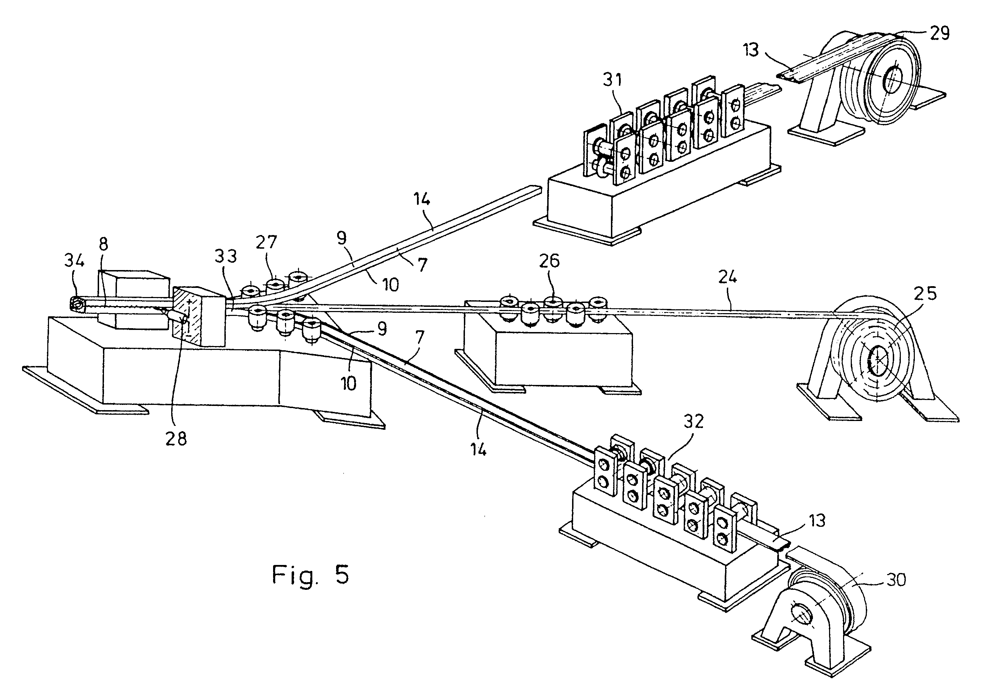

Eine mögliche maschinelle Einrichtung für eine Fertigung des supraleitenden Kabels einschließlich seiner Umhüllung ist schematisch in der Figur 5 dargestellt.

Das vorgefertigte supraleitende Kabel 24 wird von einer Haspel 25 abgewickelt und über Führungsrollen 26 geradeaus gerichtet den Einführrollen 27 vor der Schweißstation 28 zugeführt. Von zwei weiteren Haspeln bzw. Coils 29 und 30 werden die bereits anderweitig vorgefertigten Höckerprofile 13 abgerollt und paarweise einmal mit den Höckern nach oben und einmal nach unten in die Walz- bzw. Profilierstationen 31 und 32 eingeführt. Deren Profilwalzen sind gemäß der Figur 4 ausgebildet, sinngemäß jeweils spiegelsymmetrisch bzw. umgekehrt in ihrer Profilierung.

Die Profilierstationen 31 und 32 können auf eine Profilierstation reduziert werden, wenn die U-Profilherstellung von der Kabelfertigungsstraße abgekoppelt wird. Das Höckerprofil wird in einer Profilierstation umgeformt und auf eine Haspel aufgewickelt. Die Profilierstationen 31, 32 können in der Gesamtanlage Fig. 5 entfallen und werden ersetzt durch zwei Haspeln mit umgeformtem U-Profil 14.

Die aus den Profilierstationen 31 und 32 austretenden U-Profile 14 weisen jetzt mit ihren Schenkeln gegeneinander und werden mittels der Einführrollen 27 an das Kabel 24 so herangebracht, daß sich ihre jeweilige Innenkontur 7 um das Kabel 24 schließt und die Stirnflächen 9 und 10 (siehe auch die Figuren 1 und 2) gegeneinander zur Anlage kommen. Die sich bildende Trennfuge 33 wird in der Schweißstation 28 mittels der Schweißnähte 8 zugeschweißt, das supraleitende Kabel 34 mit der Umhüllung ist fertig.

Zusammengefaßt ergeben sich nun folgende Verfahrensschritte:

Erzeugen durch Walzen von zwei flachen Höckerprofilen 13 mit jeweils zwei oder drei abgerundeten Höckern 15 und Radien 17, 21 dazwischen und daneben auf der einen und einer ebenen Bodenfläche 18 auf der anderen Seite des Profils durch Walzen aus einem metallischen Flachband. Umformen der Höckerprofile 13 über mehrere Profilierstationen zu einem U-Profil 14, wobei die ebene Grundfläche 18 der Höckerprofile 13 zu einem Halbkreis 7, 20 entsrpechend dem halben Querschnitt des zu umhüllenden Kabels 1, 2, 3, 24 und die mit den Höckern 15 versehene Fläche um den Halbkreis zu einem U gewalzt wird, dessen abgerundeten Kanten 5 aus den Höckern 15 und dessen Grundfläche 19 aus den Radien 17 zwischen den Höckern 15 entstehen und das den Halbkreis 7, 20 symmetrisch zwischen seinen Schenkeln 11, 12 einschließt. Zusammenführen der U-Profile 14 mit ihren Halbkreisen um ein abgerolltes, vorgefertigtes Kabel 24, wobei die halbkreisförmigen Querschnitte 7, 20 das Kabel 24 umschließen und die Stirnflächen 9, 10 der Schenkel 11, 12 zum Aneinanderliegen kommen. Verschweißen der Trennfuge 33 zwischen den Stirnflächen 9, 10 der Schenkel 11, 12.

Für eine, nach dem allgemeinen Erfindungsgedanken hergestellte Umhüllung 4 sind auch ohne das Kabelinnere 1 bis 3 weitere Anwendungen, wie z.B. Rohrleitungen für drucktragende Medien, möglich. Die Herstellungsschritte bleiben bis auf das Einbringen des elektrischen Kabels dieselben.

EP 0 210 411 B1

<u>Bezugszeichenliste</u>

| | |
|---|---|
| 1 Innenrohr | 26 Führungsrollen |
| 2 Leiter | 27 Einführrollen |
| 3 Isolierung | 28 Schweißstation |
| 4 Stahlhülle, a,b | 29 Haspel bzw. Coil |
| 5 Radien | 30 Haspel bzw. Coil |
| 6 Außenkontur | 31 Profilierstation |
| 7 Innenkontur | 32 Profilierstation |
| 8 Schweißnähte | 33 Trennfuge |
| 9 Stirnfläche | 34 fertiges Kabel mit Um- |
| 10 Stirnfläche | hüllung |
| 11 U-Schenkel | |
| 12 U-Schenkel | |
| 13 Höckerprofil | |
| 14 U-Profil | |
| 15 Höcker | |
| 16 Höckerradius | |
| 17 Radien | |
| 18 Unterseite | |
| 19 Grundfläche | |
| 20 Radius | |
| 21 Radius | |
| 22 Oberwalzen | |
| 23 Unterwalzen | |
| 24 supraleitendes Kabel | |
| 25 Haspel | |

**Patentansprüche**

1. Verfahren zur Herstellung einer druckfesten, innen runden metallischen Umhüllung mit außen quadratischer oder hexagonaler Kontur und gerundeten Ecken um ein im technischen Sinne endloses elektrisches Kabel, z.B. einer Stahlhülle für innen gekühlte supraleitende Kabel mit hohem Innendruck und quadratischer oder hexagonaler Außenform, welches zu einer Spule mit dichter Packung verwickelbar ist, gekennzeichnet durch die folgenden Verfahrensschritte:

a) Erzeugen von zwei flachen Höckerprofilen (13) mit jeweils zwei oder drei abgerundeten Höckern (15) und Radien (17, 21) dazwischen und daneben auf der einen und einer ebenen Bodenfläche (18) auf der anderen Seite des Profiles durch Walzen aus einem metallischen Flachband,

b) Profilwalzen der Höckerprofile (13) über mehrere Profilierstationen zu einem U-Profil (14), wobei die ebene Grundfläche (18) des Höckerprofiles (13) zu einem Halbkreis (7, 20) entsprechend dem halben Querschnitt des zu umhüllenden Kabels (1, 2, 3, 24) und die mit den Höckern (15) versehene

5

Fläche um den Halbkreis (7, 20) zu einem U profiliert wird, dessen abgerundete Kanten (5) aus den Höckern (15) und dessen Grundfläche (19) aus den Radien (17) zwischen den Höckern (15) entstehen und das den Halbkreis (7, 20) symmetrisch zwischen seinen Schenkeln (11, 12) einschließt,

c) Zusammenführen der U-Profile (14) mit ihren Halbkreisen um ein abgerolltes, vorgefertigtes Kabel (24), wobei die halbkreisförmigen Querschnitte (7, 20) das Kabel (24) umschließen und die Stirnflächen (9, 10) der Schenkel (11, 12) zum Aneinanderliegen kommen,

d) Schweißen der Trennfuge (33) zwischen den Stirnflächen (9, 10) der Schenkel (11 , 12).

2. Verfahren nach Anspruch 1, gekennzeichnet durch die Schritte innerhalb des Verfahrensschrittes b):
e) Umformen der Höckerradien (16) der Höckerprofile (13) auf kleinere Werte (5) beim U-Profil (14),
f) Umformen der endlichen Radien (17) zwischen und neben den Höckern (15) zu einer Geraden,
g) Umformen der Geraden der ebenen Bodenfläche (18) zu einem Halbkreis (7) mit endlichem Radius (20).

## Claims

1. Method of producing a pressure-resistant, metallic casing, which is provided with a circular interior and has an externally square or hexagonal configuration and rounded corners, around an electric cable, which is endless in the technical sense, e.g. a steel casing for internally cooled, superconductive cables having a high internal pressure and a square or hexagonal external configuration, which cable is windable to form a coil with tight packing, characterised by the following method steps:

a) producing two flat hump profiles (13), each of which has two or three rounded humps (15) and radii (17, 21) therebetween and therebeside on one side of the profile and a flat bottom surface (18) on the other side of the profile as a result of rolling from a metallic flat strip,

b) profile rolling the hump profiles (13) via the intermediary of a plurality of profiling stations to form a U-shaped profile (14), the flat bottom surface (18) of the hump profile (13) being profiled to form a semicircle (7, 20), which corresponds to half the cross-section of the cable (1, 2, 3, 24) to be encased, and the area provided with the humps (15) being profiled to form a U-shape around the semicircle (7, 20), the rounded edges (5) of which U-shape are produced from the humps (15), and the bottom surface (19) of which is produced from the radii (17) between the humps (15), and said U-shape encloses the semicircle (7, 20) symmetrically between its webs (11, 12),

c) bringing together the U-shaped profiles (14) with their semicircles around a rolled, preformed cable (24), the semicircular cross-sections (7, 20) surrounding the cable (24), and the end faces (9, 10) of the webs (11, 12) abutting against one another,

d) welding the butt joint (33) between the end faces (9, 10) of the webs (11, 12).

2. Method according to claim 1, characterised by the steps within method step b):
e) converting the hump radii (16) of the hump profiles (13) to smaller values (5) for the U-shaped profile (14),
f) converting the finite radii (17) between and adjacent the humps (15) to form a straight line,
g) converting the straight line of the flat bottom surface (18) to form a semicircle (7) with a finite radius (20).

## Revendications

1. Méthode de fabrication d'une gaine métallique résistant à la pression, intérieurement circulaire et ayant un contour extérieur quadratique ou hexagonal et des coins arrondis pour constituer un câble électrique sans fin dans le sens technique, par exemple une gaine en acier pour un câble supraconducteur à refroidissement par l'intérieur sous une pression intérieure élevée et à forme extérieure quadrangulaire ou hexagonale, et qui est susceptible d'être enroulé sous la forme d'une bobine très dense, méthode caractérisée par les étapes suivantes :

a) on crée deux profils ondulés (13) plats, ayant chaque deux ou trois bosses arrondies (15) et des rayons (17, 21) entre les bosses et à côté de celles-ci, sur l'une des faces du profil alors que la face de fond (18) plane correspond à l'autre face du profil, par laminage à partir d'un ruban métallique plat,

b) laminage ou profil des profils ondulés (13) dans plusieurs postes de profilage pour former un profil en U (14), la surface de base plane (18) du profil ondulé (13) devenant en demi-cercle (7, 20) correspondant à la demi-section du câble à gainer (1, 2, 3, 24) et la surface comportant les bosses (15) est profilée autour du demi-cercle (7, 20) suivant un profil en U dont les arêtes arrondies (5) sont constituées des bosses (15) et dont la surface de fond (19) correspond au creux (17) entre les bosses (15) et qui englobe le demi-cercle (7, 20) de manière symétrique entre ses branches (11, 12),

c) réunion des profils en U (14) de manière que les demi-cercles arrivent autour d'un câble préfabriqué (24), dévidé, les sections (7, 20), semi-circulaires entourant le câble (24) et les surfaces frontales (9, 10) des branches (11, 12) venant s'appliquer l'une contre l'autre,

d) soudage du joint (34) entre les surfaces frontales (9, 10) des branches (11, 12).

2. Procédé selon la revendication 1, caractérisé par les étapes suivantes à l'intérieur de l'étape b) :

e) transformation des rayons (16) des bosses des profilés ondulés (13) à des valeurs (5) plus faibles dans le profil en U (14),

f) transformation des rayons à courbure sans fin (17) entre les bosses (15) et à côté de celles-ci en des droites,

g) transformation des droites de la surface de fond (18), plane en un demi-cercle (7) de rayon fini (20).

Fig. 1

EP 0 210 411 B1

Fig. 2

9

Fig. 3

## Fig. 4a

## Fig. 4b

## Fig. 4c

## Fig. 4d

## Fig. 4e

Fig. 5